# EUROPÄISCHE PATENTSCHRIFT

(11) **EP 1 010 303 B1**
(45) Veröffentlichungstag und Bekanntmachung des Hinweises auf die Patenterteilung: **27.10.2004**
(21) Anmeldenummer: 98948766.5
(22) Anmeldetag: 11.08.1998
(51) Int. Cl.: H04L 12/56

(54) **KOMMUNIKATIONSEINRICHTUNG FÜR DIE ÜBERTRAGUNG VON NACHRICHTENSIGNALEN**
COMMUNICATION DEVICE FOR TRANSMITTING MESSAGE SIGNALS
DISPOSITIF DE TRANSMISSION POUR LA TRANSMISSION DE SIGNAUX DE COMMUNICATION

(30) Priorität: 27.08.1997 DE 19737359
(43) Veröffentlichungstag der Anmeldung: 21.06.2000
(73) Patentinhaber: SIEMENS AKTIENGESELLSCHAFT, 80333 München (DE)
(72) Erfinder: HUBER, Siegfried, D-85084 Reichertshofen (DE); KLINK, Joachim, D-81369 München (DE); ZIEMANN, Klaus, D-84036 Landshut (DE); KÖPP, Jörg, D-80337 München (DE)
(86) Internationale Anmeldenummer: PCT/DE1998/002308
(87) Internationale Veröffentlichungsnummer: WO 1999/011031

(56) Entgegenhaltungen:
- US-A- 5 331 631
- KAI Y ENG ET AL: "MEMORY- AND CHANNEL-SHARING TECHNIQUES FOR CONGESTION CONTROL IN ATM NETWORKS" NETWORKING: FOUNDATION FOR THE FUTURE, SAN FRANCISCO, MAR. 28 - APR. 1, 1993, Bd. 1, Nr. CONF. 12, 28. März 1993, Seiten 266-273, XP000419741 INSTITUTE OF ELECTRICAL AND ELECTRONICS ENGINEERS
- RATHGEB E P ET AL: "THE MAINSTREETXPRESS CORE SERVICES NODE - A VERSATILE ATM SWITCH ARCHITECTURE FOR THE FULL SERVICE NETWORK" IEEE JOURNAL ON SELECTED AREAS IN COMMUNICATIONS, Bd. 15, Nr. 5, Juni 1997, Seiten 795-806, XP000657033 in der Anmeldung erwähnt

## Beschreibung

Die Erfindung betrifft eine Kommunikationseinrichtung gemäß Oberbegriff des Patentanspruches 1.

Je nach der geforderten Ausfallsicherheit einer Kommunikationseinrichtung können für die dieser zugehörigen peripheren Leitungsbaugruppen unterschiedliche Redundanzstrukturen vorgesehen seien. Beispiele hierfür sind die "1+1"-, die "1:1"und die "1:N"-Leitungsbaugruppen-Redundanz, wie es in "IEEE Journal on Selected Areas in Communications" VOL. 15, N.5, Juni 1997, Seiten 795 bis 806 beschrieben ist. Bei einer "1+1"-Redundanzstruktur werden zwei Leitungsbaugruppen parallel betrieben, um darüber Nachrichtensignalströme redundant zu übertragen. Dabei wird von diesen redundanten Nachrichtensignalströmen jedoch lediglich einer für die Weiterbehandlung berücksichtigt.

Bei einer "1:1"-Leitungsbaugruppen-Redundanz ist lediglich eine von zwei Leitungsbaugruppen als aktive Leitungsbaugruppe benutzt, während auf die verbleibende als Ersatz-Baugruppe dienende Leitungs-Baugruppe lediglich im Fehlerfalle der aktiven Leitungs-Baugruppe umgeschaltet wird.

Schließlich ist bei einer "1:N"-Leitungsbaugruppen-Redundanz zusätzlich zu einer Mehrzahl N von Leitungsbaugruppen eine einzige Ersatz-Leitungs-Baugruppe vorgesehen. Bei Auftreten eines Fehlers auf einer der N-Leitungsbaugruppen wird anstelle dieser dann die Ersatz-Leitungs-Baugruppe benutzt.

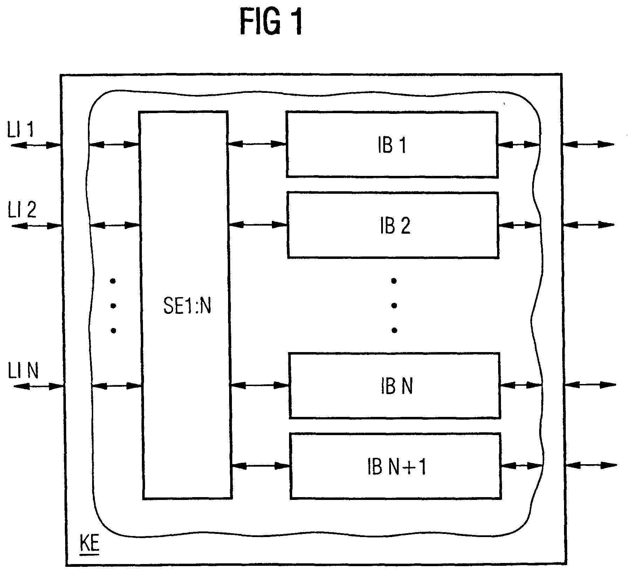

Bei einer "1:N"-Leitungsbaugruppen-Redundanz wird in der Regel zwischen den Leitungsbaugruppen und externen Übertragungsleitungen eine Selektoranordnung geschaltet, welche die einzelnen Übertragungsleitungen auf die N Leitungsbaugruppen und die Ersatz-Leitungs-Baugruppe verteilen kann. Auf diesen Stand der Technik wird im Zusammenhang mit FIG 1 nochmals eingegangen. Es sei jedoch bereits hier darauf hingewiesen, daß bei Ausfall einer solchen Selektoranordnung bzw. bei einem daraus resultierenden Tausch dieser Selektoranordnung sämtliche damit verbundenen Übertragungsleitungen und damit die über diese verlaufenden Verbindungen unterbrochen werden.

Es ist nun Aufgabe der vorliegenden Erfindung, einen Weg zu zeigen, wie eine Kommunikationseinrichtung gemäß Oberbegriff des Patentanspruches 1 ausgebildet werden kann, um die Ausfallsicherheit bei Anwendung einer "1:N"-Leitungsbaugruppen-Redundanz gegenüber dem gerade erwähnten Stand der Technik zu erhöhen.

Gelöst wird diese Aufgabe bei einer Kommunikationseinrichtung gemäß Oberbegriff des Patentanspruchs 1 durch die in diesem Patentanspruch angegebenen schaltungstechnischen Merkmale.

Die Erfindung bringt den Vorteil mit sich, daß durch die Ausbildung und Anordnung der Selektionsmittel und Schaltmittel innerhalb einer "1:N"-Redundanzgruppe während des Normalbetriebs der Kommunikationseinrichtung ein Tausch dieser Selektionsmittel durchgeführt werden kann, ohne den Normalbetrieb zu beeinträchtigen. Im Ersatzbetrieb der Kommunikationseinrichtung wirkt sich ein Tausch der Selektionsmittel lediglich auf den gerade ersatzgeschalteten Übertragungsweg aus.

Vorteilhafte Ausgestaltungen der Erfindung ergeben sich aus den Unteransprüchen.

Im folgenden wird die vorliegende Erfindung anhand von Zeichnungen beispielsweise näher erläutert.
- Figur 1: zeigt ausschnittweise den schematischen Aufbau einer Kommunikationseinrichtung entsprechend dem Stand der Technik,
- Figur 2: zeigt ausschnittweise den schematischen Aufbau einer Kommunikationseinrichtung gemäß der vorliegenden Erfindung am Beispiel eines Normalbetriebes und
- Figur 3: zeigt die in Figur 2 dargestellte Kommunikationseinrichtung für den Fall eines Ersatzbetriebes.

In FIG 1 ist als Beispiel eine nach einem asynchronen Transfermodus (ATM) arbeitende Kommunikationseinrichtung KE ausschnittweise dargestellt. Entsprechend diesem ATM-Prinzip werden in bekannter Weise Nachrichtensignale in Form von Nachrichtenzellen im Zuge virtueller Verbindungen übertragen. Für eine solche Übertragung steht die Kommunikationseinrichtung KE mit einer Mehrzahl N von Übertragungsleitungen in Verbindung, welche mit LI 1 bis LI N bezeichnet sind. Die Schnittstelle zu diesen N Übertragungsleitungen, die beispielsweise bidirektional als elektrische Leitungen ausgebildet sein mögen, bilden N Leitungsanschlüsse von Selektionsmitteln SE 1:N der Kommunikationseinrichtung KE. Über weitere N+1 Leitungsanschlüsse stehen diese Selektionsmittel mit N+1 Leitungsbaugruppen in Verbindung, welche in FIG. 1 mit IB 1 bis IB N+1 bezeichnet sind und eine "1:N"-Redundanzgruppe bilden. Dabei werden mit Hilfe dieser Selektionsmittel im Normalbetrieb, d.h. im fehlerfreien Betrieb der Leitungsbaugruppen, beispielsweise die Leitungsbaugruppen IB 1 bis IB N als aktive Leitungsbaugruppen mit den Übertragungsleitungen LI 1 bis LI N verbunden. Die verbleibende Leitungs-Baugruppe IB N+1 dient dagegen als Ersatz-Leitungs-Baugruppe. Bei Auftreten eines Fehlers in einer der aktiven Leitungsbaugruppen werden dann die Selektionsmittel derart umgesteuert, daß der bisher zwischen der fehlerhaften Leitungs-Baugruppe (z. B. IB 1) und der zugehörigen Übertragungsleitung (LI 1) verlaufende Übertragungsweg nunmehr über die Ersatz-Leitungs-Baugruppe IB N+1 verläuft.

Die anhand der FIG 1 erläuterte Kommunikationseinrichtung KE weist, wie bereits oben erwähnt, den Nachteil auf, daß bei Ausfall einer solchen Selektoranordnung bzw. bei einem daraus resultierenden Tausch dieser Selektoranordnung sämtliche damit verbundenen Übertragungsleitungen (LI 1 bis LI N) und damit die über diese verlaufenden Verbindungen unterbrochen werden.

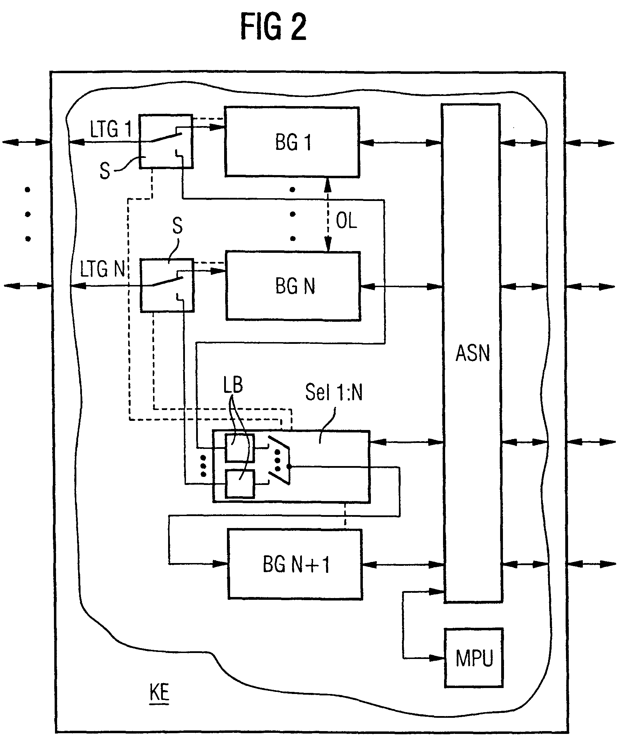

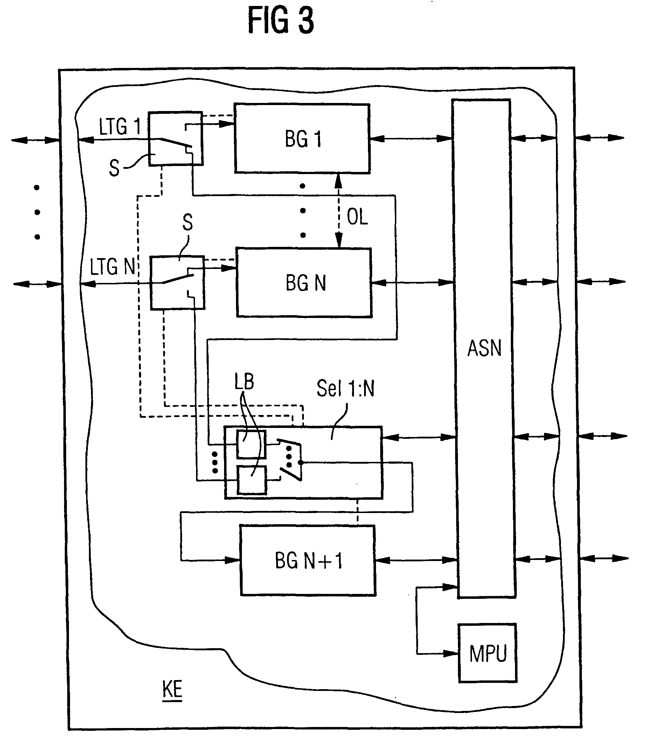

Im folgenden wird nun anhand der FIGUREN 2 und 3 eine diese Nachteile vermeidende, ebenfalls eine "1:N"-Redundanzstruktur hinsichtlich der Leitungsbaugruppen aufweisende Kommunikationseinrichtung gemäß der vorliegenden Erfindung näher erläutert. Dabei ist in FIG 2 der Normalbetrieb, in FIG 3 dagegen der Ersatzbetrieb der Kommunikationseinrichtung dargestellt. In diesen Figuren sind dabei lediglich diejenigen Elemente der Kommunikationseinrichtung dargestellt, die für das Verständnis der vorliegenden Erfindung erforderlich sind.

Bei der in FIG 2 dargestellten Kommunikationseinrichtung KE möge es sich wieder um eine nach dem asynchronen Transfermodus arbeitende ATM-Kommunikationseinrichtung handeln, welche eine Übertragung von Nachrichtensignalen in Form von Nachrichtenzellen in Zuge virtueller Verbindungen ermöglicht. Da ein derartiges ATM-Übertragungsprinzip hinlänglich bekannt ist, wird im folgenden darauf nicht näher eingegangen.

Die Kommunikationseinrichtung KE weist eine zentrale Koppelanordnung ASN auf, welcher zu deren Steuerung eine zentrale Steuereinrichtung MPU zugeordnet ist. Dabei kann es sich bei dieser Kommunikationseinrichtung um einen sogenannten "Cross Connect" zur Einrichtung von virtuellen Festverbindungen oder um eine Vermittlungseinrichtung ("Switching Node") zur Einrichtung von virtuellen Wählverbindungen handeln. In beiden Fällen erfolgt die Einrichtung der Verbindungen von der zentralen Steuereinrichtung MPU aus. Da diese Einrichtung von Verbindungen jedoch nicht Gegenstand der vorliegenden Erfindung ist, wird im folgenden darauf nicht näher eingegangen.

An die zentrale Koppelanordnung ASN sind eine Mehrzahl von Leitungsbaugruppen über beispielsweise bidirektionale elektrische Anschlüsse angeschlossen. Von diesen Leitungsbaugruppen ist eine Anzahl N+1 angedeutet, die, wie im folgenden noch näher erläutert wird, eine "1:N"-Redundanzgruppe bilden und mit BG l bis BG N+1 bezeichnet sind. Die Leitungsbaugruppen BG 1 bis BG N sind dabei jeweils für den Anschluß einer peripheren Übertragungsleitung vorgesehen. Die Übertragungsleitungen sind dabei entsprechend ihrer Zuordnung zu den Leitungsbaugruppen mit LTG 1 bis LTG N bezeichnet. In diesen Übertragungsleitungen sind jeweils mit S bezeichnete leitungsindividuelle Schaltmittel eingefügt, welche bei dem Ausführungsbeispiel als PIN-Dioden-Schalter wegen deren hoher Ausfallsicherheit (geringer FIT-Wert-"Failure In Time") ausgebildet sind. Über einen ersten Schaltweg, der in FIG 2 angedeutet ist, steht die jeweilige Leitungsbaugruppe mit der zugehörigen Übertragungsleitung in Verbindung. Ein zweiter Schaltweg des jeweiligen Schaltmittels S verbindet die zugehörige Übertragungsleitung mit einem von N Signalanschlüssen auf einer ersten Anschlußseite von Selektionsmitteln SEL 1:N. Auf einer zweiten Anschlußseite der Selektionsmittel ist dagegen lediglich an einem Einzel-Signalanschluß die zuvor erwähnte Leitungsbaugruppe BG N+1 angeschlossen, welche, wie noch erläutert wird, als Ersatz-Leitungsbaugruppe dient.

Intern verfügen die Selektionsmittel SEL 1:N über eine schematisch dargestellte "1:N"-Schalteranordnung beispielsweise in Form eines Datenselektors. Über diese Schalteranordnung sind die zuvor genannten N Signalanschlüsse wahlweise über N einzelne Schalter mit dem ebenfalls zuvor erwähnten Einzel-Signalanschluß verbindbar. In FIG 2 sind die N Schalter geöffnet dargestellt. Darüber hinaus weisen die Selektionsmittel SEL 1:N für jeden der N Signalanschlüsse eine gesonderte Testschleifen-Anordnung LB auf.

Die Steuerung der Schaltmittel S und der Selektionsmittel SEL 1:N erfolgt von der zentralen Steuereinrichtung MPU aus. Hierfür werden die erforderlichen Steuersignale zunächst in Form von Nachrichtenzellen im Zuge einer fest eingerichteten virtuellen Verbindung zu der Ersatz-Leitungsbaugruppe BG N+1 hin übertragen, wobei hierfür ein internes Transportprotokoll (ITP) benutzt wird. Anschließend werden die in den Nachrichtenzellen enthaltenen Steuerinformationen beispielsweise über einen zwischen der Ersatz-Leitungsbaugruppe und den Selektionsmitteln verlaufenden seriellen I²C-Bus (in FIG 2 durch unterbrochene Linien angedeutet) weitergeleitet. Auf den Selektionsmitteln SEL 1:N werden aus den I²C-Bus-Informationen Steuersignale für die Schaltmittel S abgeleitet und anschließend über einzelne Steuerleitungen den Schaltmitteln S zugeführt. Im Übrigen werden die einzelnen Testschleifen-Anordnungen LB auf den Selektionsmittel jeweils ebenfalls über den genannten I²C-Bus von der Ersatz-Leitungsbaugruppe BG N+1 gesteuert. Die Steuerinformationen werden dabei von der zentralen Steuereinrichtung MPU aus übertragen (über die genannte feste virtuelle Verbindung).

Wie bereits vorstehend angegeben, ist in FIG 2 der Fall dargestellt, daß die Kommunikationseinrichtung KE im Normalbetrieb arbeitet, d.h. daß insbesondere die Leitungsbaugruppen fehlerfrei funktionieren. In diesem Normalbetrieb sind durch die leitungsindividuellen Schaltmittel S die Übertragungsleitungen LTG 1 bis LTG N mit den Leitungsbaugruppen BG 1 bis BG N verbunden, um eine normale Übertragung von Nachrichtensignalen (Nachrichtenzellen) innerhalb der Kommunikationseinrichtung KE durchzuführen. In diesem Normalbetrieb werden im übrigen die Schaltmittel S jeweils von ihrer zugehörigen Leitungsbaugruppe (BG 1 bis BG N) auf Durchgang zu den Leitungsbaugruppen gesteuert. Im Fehlerfalle einer Leitungsbaugruppe sperrt diese jedoch die zugehörigen Schaltmittel, so daß in noch näher zu beschreibender Weise eine Ersatzschaltung zu den Selektionsmittel SEL 1:N erfolgen kann.

Ohne Beeinträchtigung des Normalbetriebs der Kommunikationseinrichtung KE ist von der zentralen Steuereinrichtung MPU her der "1:N"-Auswahlmechanismus für die Leitungsbaugruppen überprüfbar. Dafür können von der zentralen Steuereinrichtung her in der zuvor erwähnten Weise über die Ersatz-Leitungsbaugruppe BG N+1 Steuersignale übertragen werden, um einerseits einen ausgewählten Schalter innerhalb der "1:N"-Schalteranordnung der Selektionsmittel SEL 1:N zu schließen und andererseits über die diesem Schalter nachgeschaltete Testschleifen-Anordnung LB eine Prüfschleife einzulegen. Zur Vermeidung von hohen Signaldämpfungen können die einzelnen Prüfschleifen mit Hilfe von Relais realisiert werden.

Anschließend kann beispielsweise ein festgelegtes Prüfsignal von der zentralen Steuereinrichtung MPU her über die Ersatz-Leitungsbaugruppe der gerade aktivierten Testschleife zugeführt und von dort aus zu der zentralen Steuereinrichtung hin zurückübertragen werden. Ein Test kann dabei periodisch wiederholt in einer festgelegten Reihenfolgen mit sämtlichen Testschleifen-Anordnung LB der Selektionsmittel SEL 1:N durchgeführt werden. Auf diese Weise kann in festgelegten Zeitabständen die Funktionalität des "1:N"-Auswahlmechanismus überprüft werden.

Wie in Figur 2 zusätzlich angedeutet ist, sind jeweils benachbarte Leitungsbaugruppen BG 1 bis BG N direkt über eine bidirektionale Steuerleitung OL verbunden. Darüber hinaus besteht zwischen jeder der Leitungsbaugruppen eine feste virtuelle Verbindung über die Koppelanordnung ASN zu der zentralen Steuereinrichtung MPU hin. Bei Auftreten eines Fehlers in einer der Leitungsbaugruppen wird ein Steuersignal über die in Frage kommende Steuerleitung OL zu der benachbarten Leitungsbaugruppe hin übertragen und von dort aus über die genannte virtuelle Verbindung an die zentrale Steuereinrichtung MPU weitergeleitet. Auf den Empfang eines solchen Steuersignals hin wird dann von der zentralen Steuereinrichtung MPU aus der Ersatzbetrieb für die fehlerhafte Leitungsbaugruppe gesteuert. Ein solcher Ersatzbetrieb wird im folgenden anhand der Figur 3 erläutert, wobei als Beispiel die Leitungsbaugruppe BG 1 eine fehlerhafte Leitungsbaugruppe darstellen möge.

Nach Figur 3 sind die der Leitungsbaugruppe BG 1 zugeordneten Schaltmittel S so gesteuert, daß deren oben erwähnter zweiter Schaltweg zu dem in Frage kommenden Signalanschluß der Selektionsmittel SEL 1 : N aktiviert ist. Darüber hinaus ist innerhalb dieser Selektionsmittel der dem gerade genannten Signalanschluß zugeordnete Schalter derart gesteuert, daß nunmehr ein geschlossener Verbindungsweg von der Übertragungsleitung LTG 1 über die Selektionsmittel SEL 1:N zu der Ersatz-Leitungsbaugruppe BG N+1 hin existiert. Damit kann dann über diese Ersatz-Leitungsbaugruppe als Ersatz für die als Beispiel angenommene fehlerhafte Leitungsbaugruppe BG 1 eine Übertragung von Nachrichtensignalen (Nachrichtenzellen) erfolgen. Ein solcher Ersatz-Mechanismus gilt auch für jede andere der Leitungsbaugruppen BG 2 bis BG N.

Die anhand der FIGUREN 2 und 3 erläuterte Kommunikationseinrichtung KE kann auch derart modifiziert sein, daß die Selektionsmittel SEL 1:N wie eine Leitungsbaugruppe an die Koppelanordnung ASN angeschlossen ist ( durch eine unterbrochene Linie in den FIGUREN 2 und 3 angedeutet) und mit der zentralen Steuereinrichtung MPU über eine feste virtuelle Verbindung in Verbindung steht. Ein Anstoß für die Steuerung der Selektionsmittel SEL 1:N selbst und der leitungsindividuellen Schaltmittel S erfolgt dabei durch von der zentralen Steuereinrichtung MPU im Zuge der virtuellen Verbindung übertragene Steuersignale (Übertragung mit Hlfe des internen Transportprotokolls ITP). Nach Maßgabe dieser Steuersignale sind dann innerhalb der Selektionsmittel SEL 1:N die zuvor erwähnte "1:N"-Schalteranordnung, die einzelnen Testschleifen-Anordnungen LB und die einzelnen Schalter der leitungsindividuelle Schaltmittel S einstellbar. Für die Einstellung der zuletzt genannten Schalter können zwischen diesen und den Selektionsmitteln SEL 1:N wieder die bereits erwähnten einzelnen Steuerleitungen vorgesehen sein, was in den FIGUREN 2 und 3 durch unterbrochene Linien angedeutet ist.

Eine weitere Modifizierung der Kommunikationseinrichtung KE kann auch darin bestehen, daß bei Vorhandensein einer Vielzahl von Leitungsbaugruppen aus diesen in oben beschriebener Weise mehrere unabhängige Redundanzgruppen gebildet werden, die jeweils über eine bestimmte Anzahl von aktiven Leitungsbaugruppen und eine diesen zugeordnete Ersatz-Leitungsbaugruppe verfügen.

Abschließend sei auch noch darauf hingewiesen, daß zwar vorstehend die vorliegende Erfindung am Beispiel einer ATM-Kommunikationseinrichtung erläutert wurde, die Erfindung jedoch nicht darauf beschränkt ist. Vielmehr ist diese Erfindung auch in von dem ATM-Prinzip abweichenden Kommunikationseinrichtungen anwendbar, wenn in diesen eine "1:N"-Redundanzstruktur für die Leitungsbaugruppen vorzusehen ist.

## Patentansprüche

1. Kommunikationseinrichtung (KE) für die Übertragung von Nachrichtensignalen über Übertragungsleitungen (LTG 1, ...., LTG N) mit einer zentralen Koppelanordnung (ASN) und mit dieser zugehörigen, jeweils mit einer der Übertragungsleitungen verbundenen Leitungsbaugruppen (BG 1,...BG N), welche mindestens eine aus einer Anzahl N von aktiven Leitungsbaugruppen und einer zusätzlichen Ersatz-Leitungs-Baugruppe (IB N+1) bestehende "1:N"-Redundanzgruppe bilden, wobei innerhalb einer solchen "1+N"-Redundanzgruppe über Selektionsmittel (SEL 1:N) jede der N aktiven Leitungsbaugruppen durch die zugehörige Ersatz-Leitungs-Baugruppe ersatzschaltbar ist,
**dadurch gekennzeichnet,**
**daß** die Selektionsmittel (SEL 1:N) der jeweiligen "1:N"-Redundanzgruppe auf einer ersten Anschlußseite über N Signalanschlüsse, auf einer zweiten Anschlußseite dagegen lediglich über einen mit der Ersatz-Leitungsbaugruppe (IB N+1) verbundenen Einzel-Signalanschluß verfügen, daß in jede der Übertragungsleitungen (LTG 1,..., LTG N) leitungsindividuelle Schaltmittel (S) eingefügt sind, welche die jeweilige Übertragungsleitung wahlweise über einen ersten Schaltweg mit der dieser zugeordneten aktiven Leitungsbaugruppe oder über einen zweiten Schaltweg mit einem der N Signalanschlüsse der Selektionsmittel (SEL 1:N) verbinden, und daß die Selektionsmittel (SEL 1:N) und die N Schaltmittel (S) derart steuerbar sind, daß im Normalbetrieb die N Übertagungsleitungen direkt über die ersten Schaltwege der leitungsindividuellen Schaltmitttel (S) mit den N aktiven Leitungsbaugruppen (BG 1, ... , BG N) verbunden sind, während im Ersatzbetrieb einer der N aktiven Leitungsbaugruppen (z.B. BG 1) deren zugeordnete Übertragungsleitung (LTG 1) über den zweiten Schaltweg der zugehörigen Schaltmittel (S) und die Selektionsmittel (SEL 1:N) mit der Ersatz-Leitungsbaugruppe (IB N + 1) verbunden ist.

2. Kommunikationseinrichtung nach Anspruch 1,
**dadurch gekennzeichnet,**
**daß** diese als nach einem asynchronen Transfermodus arbeitende, die Übertragung von Nachrichtensignalen im Zuge von virtuellen Verbindungen ermöglichende ATM-Kommunikationseinrichtung ausgebildet ist
und **daß** der Koppelanordnung (ASN) eine den Aufbau und Abbau von virtuellen Verbindungen steuernde zentrale Steuereinrichtung (MPU) zugeordnet ist.

3. Kommunikationseinrichtung nach Anspruch 2,
**dadurch gekennzeichnet,**
**daß** die zentrale Steuereinrichtung (MPU) weiter derart ausgebildet ist, daß von dieser aus die Selektionsmittel (SEL 1:N) und die leitungsindividuellen Schaltmittel (S) der jeweiligen "1:N"-Redundanzgruppe steuerbar sind.

4. Kommunikationseinrichtung nach einem der Anspruch 1 bis 3,
**dadurch gekennzeichnet,**
**daß** die Selektionsmittel (SEL 1:N) der jeweiligen "1:N"-Redundanzgruppe weiter derart ausgebildet sind, daß in den Selektionsmitteln jedem der N Signalanschlüsse gesonderte Testschleifenmittel (LB) zugeordnet sind, welche im Normalbetrieb jeweils das Einlegen einer Prüfschleife von und zu der Koppelanordnung (ASN) gestattet.

5. Kommunikationseinrichtung nach Anspruch 4,
**dadurch gekennzeichnet,**
**daß** die zentrale Steuereinrichtung (MPU) weiter derart ausgebildet ist, daß durch diese individuell für die Testschleifenmittel (LB) jeweils zunächst das Einlegen der zugehörigen Prüfschleife und anschließend das Durchführen eines Schleifentests steuerbar ist.

6. Kommunikationseinrichtung nach einem der Ansprüch 2 bis 5,
**dadurch gekennzeichnet,**
**daß** benachbarte Leitungsbaugruppen einer "1:N"-Redundanzgruppe jeweils über eine Steuerleitung (OL) für die Abgabe einer Fehlermeldung miteinander verbunden sind und die Leitungsbaugruppen (BG 1 bis BG N) derart ausgebildet sind, daß bei Empfang einer solchen Fehlermeldung ein das Aktivieren eines Ersatzbetriebes forderndes Steuersignal an die zentrale Steuereinrichtung (MPU) abgegeben wird.

7. Kommunikationseinrichtung nach einem der Ansprüche 1 bis 6,
**dadurch gekennzeichnet,**
**daß** die leitungsindividuellen Schaltmittel (S) der jeweiligen "1:N"-Redundanzgruppe als PIN-Diodenschalter ausgebildet sind.

## Claims

1. Communication device (KE) for the transmission of message signals over transmission lines (LTG 1,....,LTG N) with a central switching network (ASN) and with line modules (BG 1,.... BG N) associated with this, each connected to one of the transmission lines, which forms a "1:N" redundancy group consisting of at least one of a number N of active line modules and of an additional protection line module (IB N+1)', where, within such a "1+N" redundancy group each of the N active line modules can be protected by an associated protection line module selected via a selection means (SEL 1:N), **characterized in that**,
the selection means (SEL 1:N) of the relevant "1:N" redundancy group has N signal terminals on a first terminal side, as opposed to just one single terminal connected to the protection line module (IB N+1) on a second terminal side, that in each of the transmission lines (LTG 1,...,LTG N) line-individual switching means (S) are inserted which optionally connect the relevant transmission line via a fist switching paths with the line module assigned to this or via a second switching path to one of the N signal terminals of the selection means (SEL 1:N), and that the selection means (SEL 1:N) and the N switching means (S) can be controlled in such a way that in normal operation the N transmission lines are connected directly via the first switching paths of the line-individual switching means (S) to the N active line modules (BG 1, ... , BG N), whereas in protection mode, one of the N active line modules (e.g. BG 1) of its assigned transmission line (LTG 1) is connected via the second switching path of the associated switching means (S) and the selection means (SEL 1:N) to the protection module (IB N + 1).

2. Communication device in accordance with Claim 1,
**characterized in that**
this is embodied as an ATM communication device operating in accordance with an asynchronous transfer mode, allowing the transmission of message signals in the course of virtual connections and that the switching network (ASN) is assigned a Message Processing Unit (MPU) for control of establishing and clearing down virtual connections.

3. Communication device in accordance with Claim 2,
**characterized in that**
the Message Processing Unit (MPU) is further embodied such that the selection means (SEL 1:N) and the line-individual switching means (S) of the relevant "1:N"-redundancy group can be controlled from it.

4. Communication device in accordance with one of the Claims 1 to 3.
**characterized in that**
the selection means (SEL 1:N) of the relevant "1:N" redundancy group is further embodied in such a way that in the selection means, each of the N signal terminals is assigned separate test loopback means (LB) which in normal operation allows a loopback to be applied from and to the switching network (ASN) in each case.

5. Communication device in accordance with Claim 4,
**characterized in that**
the Message Processing Unit (MPU) is further embodied in such a way that it can be used for individual control of the loopback means (LB) initially for applying the associated loopback and subsequently for performing the loopback test in each case.

6. Communication device in accordance with one of the Claims 2 to 5.
**characterized in that**
adjacent line modules of a "1:N" redundancy group are connected to each other via a control line (OL) for issuing an error message and the line modules (BG 1 to BG N) are embodied in such a way that when such an error message is received, a mode control signal requesting activation of protection mode is issued to the Message Processing Unit (MPU).

7. Communication system in accordance with Claims 1 to 6,
**characterized in that**
the line-individual switching means (S) of the relevant "1:N" redundancy group are embodied as PIN diode switches.

## Revendications

1. Dispositif de communication (KE) pour la transmission de signaux d'information par l'intermédiaire de lignes de transmission (LTG 1, .... , LTG N), avec une configuration de couplage centralisée (ASN) et avec des modules de ligne (BG 1, ... BG N) associés à cette dernière et respectivement reliés à l'une des lignes de transmission, qui forment au moins un groupe de redondance « 1 : N » constitué d'un nombre N de modules de ligne actifs et d'un module de ligne de secours supplémentaire (IB N+1), à l'intérieur d'un groupe de redondance « 1+ N » de ce type, chacun des N modules de ligne actifs pouvant être commutés en remplacement par le module de ligne de secours associé, par l'intermédiaire de moyens de sélection (SEL 1 : N), **caractérisé en ce que** les moyens de sélection (SEL 1 : N) du groupe de redondance « 1 : N » respectif disposent sur un premier côté de raccordement de N raccordements de signal mais qu'ils ne disposent en revanche sur un second côté de raccordement que d'un seul raccordement individuel de signal relié au module de ligne de secours (IB N + 1), **en ce que** des moyens de commutation (S) individuels à chaque ligne, qui relient au choix la ligne de transmission respective avec le module de ligne actif qui lui est associé, par l'intermédiaire d'une première voie de commutation, ou avec l'un des N raccordements de signal des moyens de sélection (SEL 1 : N), par l'intermédiaire d'une seconde voie de commutation sont insérés dans chacune des lignes de transmission (LTG 1, ... , LTG N), et **en ce que** les moyens de sélection (SEL 1 : N) et les N moyens de commutation (S) sont pilotables de façon telle, qu'en mode d'exploitation normal, les N lignes de transmission sont directement reliées aux N modules de ligne actifs (BG 1, ..., BG N), par l'intermédiaire des premières voies de commutation des moyens de commutation (S) individuels à chaque ligne, alors qu'en mode d'exploitation de secours de l'un des N modules de ligne actifs (par exemple BG 1), la ligne de transmission (LTG 1) qui lui est associée est reliée par l'intermédiaire de la seconde voie de commutation des moyens de commutation (S) associés et des moyens de sélections (SEL 1 : N) au module de ligne de secours (IB N + 1).

2. Dispositif de communication selon la revendication 1, **caractérisé en ce que** ce dernier est conçu sous forme d'un dispositif de communication MTA, fonctionnant selon un mode de transfert asynchrone et permettant la transmission de signaux d'informations au cours de communications virtuelles et **en ce qu'**un dispositif de commande centralisé (MPU) pilotant l'établissement et la coupure de communications virtuelles est associé à la configuration de couplage (ASN).

3. Dispositif de communication selon la revendication 2, **caractérisé en ce que** le dispositif de commande centralisé (MPU) est de plus conçu de façon à ce que les moyens de sélection (SEL 1 : N) et les moyens de commutation (S) individuels à chaque ligne du groupe de redondance respectif « 1 : N » soient pilotables à partir de celui-ci.

4. Dispositif de communication selon l'une quelconque des revendications 1 à 3, **caractérisé en ce que** les moyens de sélection (SEL 1 : N) du groupe de redondance « 1 : N » respectif sont de plus conçus de façon à ce que dans les moyens de sélection, des moyens pour boucles de test (LB), qui en mode d'exploitation normal permettent respectivement la mise en place d'une boucle de contrôle à partir et vers la configuration de couplage (ASN) sont associés à chacun des N raccordements de signal.

5. Dispositif de communication selon la revendication 4, **caractérisé en ce que** le dispositif de commande centralisé (MPU) est de plus conçu de façon à ce que, individuellement et respectivement pour les moyens de boucles de test (LB), d'abord la mise en place de la boucle de contrôle associée, puis la réalisation d'un test en boucle soient pilotables par le dispositif de commande centralisé.

6. Dispositif de communication selon l'une quelconque des revendications 2 à 5, **caractérisé en ce que** des modules de ligne voisins d'un groupe de redondance « 1 : N » sont respectivement reliés entre eux par une ligne pilote (OL), pour la délivrance d'un message de défaut et les modules de ligne (BG 1 à BG N) sont conçus de façon telle, que lors de la réception d'un message de défaut de ce type, un signal de commande demandant l'activation d'un mode d'exploitation de secours soit délivré au dispositif de commande centralisé (MPU).

7. Dispositif de communication selon l'une quelconque des revendications 1 à 6, **caractérisé en ce que** les moyens de commutation (S) individuels à chaque ligne du groupe de redondance respectif « 1 : N » sont conçus sous forme de commutateurs à diodes PIN.
